# EUROPÄISCHE PATENTSCHRIFT

(11) **EP 4 003 639 B1**
(45) Veröffentlichungstag und Bekanntmachung des Hinweises auf die Patenterteilung: **15.05.2024**
(21) Anmeldenummer: 20747357.0
(22) Anmeldetag: 23.07.2020
(51) Int. Cl.: B23K 37/047, B23K 26/38, B23Q 7/04, B23K 101/06

(54) **ENTLADEVORRICHTUNG ZUM ENTLADEN EINES ROHRSTÜCKES, ROHRBEARBEITUNGSMASCHINE UND VERFAHREN ZUM ENTLADEN EINES ROHRSTÜCKES**
DISCHARGE DEVICE FOR DISCHARGING A PIPE SECTION, PIPE MACHINING APPARATUS AND METHOD FOR DISCHARGING A PIPE SECTION
DISPOSITIF DE DÉCHARGEMENT POUR LE DÉCHARGEMENT D'UNE PIÈCE TUBULAIRE, MACHINE D'USINAGE DE TUBES ET PROCÉDÉ POUR DÉCHARGER UNE PIÈCE TUBULAIRE

(30) Priorität: 26.07.2019 DE 102019120323
(43) Veröffentlichungstag der Anmeldung: 01.06.2022
(73) Patentinhaber: TRUMPF Werkzeugmaschinen SE + Co. KG, 71254 Ditzingen (DE)
(72) Erfinder: SCHOPF, Ralf, 71254 Ditzingen (DE)
(74) Vertreter: Trumpf Patentabteilung
(86) Internationale Anmeldenummer: PCT/EP2020/070750
(87) Internationale Veröffentlichungsnummer: WO 2021/018711

(56) Entgegenhaltungen:
- EP-A1- 2 492 041
- EP-A1- 2 641 693
- JP-U- H0 531 803

## Beschreibung

Die Erfindung betrifft eine Entladevorrichtung zum Entladen eines Rohrstückes, eine zugehörige Rohrbearbeitungsmaschine mit einer Bearbeitungsvorrichtung und einer solchen Entladevorrichtung sowie ein Verfahren zum Entladen eines Rohrstückes mittels einer solchen Entladevorrichtung.

Eine derartige Rohrbearbeitungsmaschine ist beispielsweise aus der EP 2 492 041 A1 bekannt. Die Entladevorrichtung dieser Rohrbearbeitungsmaschine umfasst einen in Rohrlängsrichtung relativ zu einer Bearbeitungsstelle einer Bearbeitungsvorrichtung der Rohrbearbeitungsmaschine verfahrbaren Ablageschlitten mit einer Gleitfläche zur Ablage eines Rohres während der Bearbeitung, sowie mindestens einen in Rohrlängsrichtung relativ zu der Bearbeitungsstelle verfahrbaren Stützschlitten. Der Stützschlitten weist mindestens einen Stützkörper für das Rohr mit einer Wand zur radialen Abstützung des Rohres auf. Die Gleitfläche des Ablageschlittens und der Stützkörper des Stützschlittens sind in einer weiteren Richtung verfahrbar, derart, dass der Ablageschlitten und der Stützschlitten in Rohrlängsrichtung aneinander vorbei bewegbar sind.

Es hat sich gezeigt, dass das Bedürfnis besteht, unterschiedlich lange Rohrstücke kontrolliert zu entladen, ohne die Entladevorrichtung für den Wechsel der unterschiedlich langen Rohrstücke umrüsten zu müssen.

Nach einem ersten Aspekt der Erfindung wird diese Aufgabe gelöst durch eine Entladevorrichtung zum Entladen eines Rohrstückes, das aus einem Rohr mittels einer Bearbeitungsvorrichtung bearbeitet wurde, wobei die Entladevorrichtung eine Rohrführungsachse aufweist, entlang derer das Rohr seiner Länge nach von der Bearbeitungsvorrichtung kommend geführt wird, und wobei zumindest eine Entladeklappe vorgesehen, die um eine parallel zu der Rohrführungsachse verlaufende Klappachse aus einer Fallstellung in eine Entladestellung klappbar ist, wobei die zumindest eine Entladeklappe derart eingerichtet ist, dass in der Fallstellung das Rohrstück an der zumindest einen Entladeklappe vorbei fallen kann und in der Entladestellung das Rohrstück, insbesondere geführt und, kontrolliert entladen werden kann.

Mittels der zumindest einen Entladeklappe kann eine Länge eines Gleitabschnitts relativ in Richtung der Rohrführungsachse eingestellt werden, so dass sie an eine Länge des Rohrstückes angepasst wird, das aus dem Rohr bearbeitet wird, um sowohl kurze als auch lange Rohrstücke kontrolliert mittels des Gleitabschnitts entladen oder ausschleusen zu können.

Die zumindest eine Entladeklappe kann in der Entladestellung dazu eingerichtet sein, das Rohr während der Bearbeitung des Rohres durch die Bearbeitungsvorrichtung zu stützen. Alternativ kann die zumindest eine Entladeklappe in der Entladestellung dazu eingerichtet sein, das Rohr während der Bearbeitung des Rohres durch die Bearbeitungsvorrichtung nicht zu stützen, insbesondere nicht zu kontaktieren. Jedoch ist in diesem Falle zumindest vorgesehen, dass die Entladeklappe in der Entladestellung dazu eingerichtet ist, in einem solchen Abstand zu dem Rohr angeordnet zu sein, dass das Rohrstück nach dessen Bearbeitung auf die Entladeklappe gelangt und von der Entladeklappe aus kontrolliert entladen werden kann. Dies ermöglicht beispielsweise eine fliegende Bearbeitung des Rohres, bei der das Rohr nur in einer Spannvorrichtung einer Zuführvorrichtung der Rohrbearbeitungsmaschine befestigt ist.

Die zumindest eine Entladeklappe weist insbesondere eine erste Gleitfläche auf. Das Entladen des Rohrstückes kann entsprechend durch ein Gleiten des Rohrstückes über die erste Gleitfläche erfolgen. Die erste Gleitfläche ist insbesondere eben und/oder glatt. Die erste Gleitfläche kann eine rechteckige Form aufweisen. Ferner kann die zumindest eine Entladeklappe eine Längserstreckung in Richtung quer, insbesondere senkrecht, zu der Rohrführungsachse aufweisen. Die Längserstreckung der Entladeklappe ist die größte Erstreckung der Entladeklappe und damit größer als eine Breitenerstreckung der Entladeklappe in Richtung der Rohrführungsachse.

Die Bearbeitungsvorrichtung ist insbesondere eine Schneidvorrichtung. Entsprechend wird das Rohr insbesondere zu dem Rohrstück geschnitten. Die Bearbeitungsvorrichtung kann beispielsweise eine Rohrlaserschneidevorrichtung sein. Bei einer Rohrlaserschneidevorrichtung wird mittels Laserstrahlen ein zu bearbeitendes Rohr zu Rohrstücken geschnitten.

Erfindungsgemäß ist zumindest ein Stützmittel der Entladevorrichtung zum Stützen des Rohres auf einer der Bearbeitungsvorrichtung abgewandten Seite der zumindest einen Entladeklappe angeordnet. Das Stützen des Rohres während der Bearbeitung des Rohres ist insbesondere bei langen Rohrstücken gegenüber einer fliegenden Bearbeitung vorteilhaft und erhöht die Präzision bei der Bearbeitung, so dass besonders maßhaltige Rohrstücke erhalten werden.

Bevorzugt ist das zumindest eine Stützmittel aus einer Stützlage in eine Entladelage bewegbar ausgebildet, wobei das zumindest eine Stützmittel das Rohr in der Stützlage stützt und in der Entladelage freigibt, so dass das Rohrstück entladen werden kann. Dies ermöglicht ein kontrolliertes Ablegen des Rohrstückes von dem Stützmittel auf die Entladeklappe, um das Rohrstück anschließend zu entladen. Insbesondere befindet sich das Stützmittel in der Stützlage relativ oberhalb der zumindest einen Entladeklappe in der Entladestellung gemessen an einer Höhenachse, so dass es zu keiner Beeinträchtigung zwischen der Entladeklappe und den Stützmitteln kommt. Die Höhenachse verläuft orthogonal zu der Rohrführungsachse und insbesondere auch orthogonal zu dem Boden. Ferner befindet sich insbesondere das Stützmittel in der Entladelage relativ unterhalb der zumindest einen Entladeklappe in der Entladestellung gemessen an der Höhenachse, so dass es auch hier zu keiner Beeinträchtigung zwischen der Entladeklappe und den Stützmitteln.

Auch bevorzugt ist, dass das zumindest eine Stützmittel schwenkbar relativ gegenüber einer Schwenkachse ausgebildet ist, um aus der Stützlage in die Entladelage bewegt zu werden. Insbesondere weist jedes des zumindest einen Stützmittels eine eigene Schwenkachse auf. Die jeweilige Schwenkachse ist dabei insbesondere orthogonal zu den Klappachsen verlaufend angeordnet. Das Stützmittel kann mit der Schwenkachse über einen Schwenkarm verbunden sein. Der Schwenkarm kann zum Schwenken mit einem Antrieb oder einem Motor, insbesondere mit einem elektrischen Antriebsmotor, an der Schwenkachse gekoppelt sein. Alternativ kann das Stützmittel entlang der Höhenachse verschiebbar, beispielsweise verfahrbar entlang von Schienen, ausgebildet sein, um aus der Stützlage in die Entladelage bewegt zu werden. Gegenüber einem Verschieben hat das Schwenken jedoch den Vorteil, dass das Stützmittel auch in Richtung entlang der Rohrführungsachse und nicht nur entlang der Höhenachse bewegt werden kann.

Dabei ist besonders bevorzugt, dass sich ein Stützmittel des zumindest einen Stützmittels in der Stützlage in einem Klappbereich zumindest einer Entladeklappe der zumindest einen Entladeklappe befindet. Der Klappbereich ist ein Bereich, in dem die Entladeklappe aus der Fallstellung in die Entladestellung und umgekehrt geklappt wird. Dies ermöglicht es, den Klappbereich sowohl für kurze Rohrstücke als auch für lange Rohrstücke nutzbar zu machen. So kann die Entladeklappe in die Entladestellung gebracht werden, um ein kurzes Rohrstück zu entladen. Die Entladeklappe kann aber auch in die Fallstellung gebracht werden und das Stützmittel kann in die Stützlage und in den Klappbereich der in der Fallstellung befindlichen Entladeklappe gebracht werden, um das Rohr in dem Klappbereich zu stützen und damit die Präzision bei der Bearbeitung des Rohres zu erhöhen.

Entsprechend ist das Stützmittel, das sich in der Stützlage in dem Klappbereich der Entladeklappe befindet, bevorzugt so eingerichtet, dass es die Stützlage nur einnehmen kann, wenn die Entladeklappe, in deren Klappbereich sich das erste Stützmittel befindet, sich in der Fallstellung befindet. Anderenfalls könnte die Entladeklappe das Schwenken des Stützmittels in die Stützlage und in den Stützbereich blockieren.

Dabei ist denkbar, dass wenigstens zwei Entladeklappen vorgesehen sind, wobei Einrichtung derart ist, dass die der Bearbeitungsvorrichtung zugewandte Entladeklappe sich in der Entladestellung befinden kann und die der Bearbeitungsvorrichtung abgewandte Entladeklappe sich in der Fallstellung befinden muss, wenn das Stützmittel sich in der Stützlage in dem Klappbereich der der Bearbeitungsvorrichtung abgewandten Entladeklappe befindet. Dadurch können insbesondere kurze und mittellange Rohrstücke entsprechend gut abgestützt werden.

Vorteilhafterweise ist das zumindest eine Stützmittel eine Stützrolle. Die Stützrolle stützt das Rohr nicht nur, sondern führt es auch kontrolliert durch Drehung der Stützrolle entlang der Rohrführungsachse.

Vorzugsweise ist ein erstes Gleitelement neben dem zumindest einen Stützmittel zum Entladen des Rohrstückes angeordnet. Dadurch wird sichergestellt, dass auch lange Rohrstücke kontrolliert entladen werden, wenn das Stützmittel von der Stützlage in die Entladelage gebracht wird. Das erste Gleitelement kann beispielsweise eine Gleitschiene sein. Das erste Gleitelement weist eine zweite Gleitfläche auf. Die Anordnung kann derart sein, dass die erste Gleitfläche bei sich in der Entladestellung befindlichen Entladeklappe und die zweite Gleitfläche in einem gleichen oder im Wesentlichen gleichen Gleitwinkel relativ gegenüber der Klappachse angeordnet. Im Wesentlichen erfasst dabei Abweichungen der Gleitwinkel um bis zu 10°, insbesondere 5° und ferner insbesondere 3° voneinander.

Es ist bevorzugt, dass die zumindest eine Entladeklappe mit einem Antrieb, beispielsweise einem Kolben-Zylinder-Antrieb verbunden ist, mittels dem die zumindest eine Entladeklappe aus der Fallstellung in die Entladestellung klappbar ist.

Der Antrieb ermöglicht das Klappen der Entladeklappe mittels einer Linearbewegung, so dass das Klappen auf einfache Weise erfolgt.

Es ist auch bevorzugt, dass ein zweites Gleitelement unter oder neben der zumindest einen Entladeklappe angeordnet ist, wenn die Entladeklappe sich in der Entladestellung befindet. Das zweite Gleitelement kann beispielsweise ein Gleittisch sein. Insbesondere kann auch das erste Gleitelement neben dem zweiten Gleitelement angeordnet sein. Insbesondere erstreckt sich das zweite Gleitelement von der zumindest einen Entladeklappe zu dem zumindest einen ersten Gleitelement. Das zweite Gleitelement ermöglicht ein kontrolliertes Entladen von der Entladeklappe und auch von dem ersten Gleitelement, da es eine dritte Gleitfläche bereitstellt, auf der das Rohrstück vollständig gleiten kann. Die erste Gleitfläche und die dritte Gleitfläche sind insbesondere in einem gleichen oder im Wesentlichen gleichen Gleitwinkel relativ gegenüber der Klappachse angeordnet.

Vorzugsweise sind zumindest zwei Entladeklappen nebeneinander angeordnet. Dass die Entladeklappen nebeneinander angeordnet sind bedeutet insbesondere, dass keine weiteren Bauteile, wie zum Beispiel ein Stützmittel, zwischen den zwei Entladeklappen angeordnet ist. Mit anderen Worten befindet sich insbesondere ein freier Abstand zwischen den nebeneinander angeordneten Entladeklappen. Durch die zwei nebeneinander angeordneten Entladeklappen wird die Fähigkeit der Entladevorrichtung, unterschiedlich lange Rohrstücke im Wechsel zu entladen, weiter verbessert.

Nach einem zweiten Aspekt der Erfindung wird die eingangs erwähnte Aufgabe gelöst durch eine Rohrbearbeitungsmaschine mit einer Bearbeitungsvorrichtung und einer erfindungsgemäßen Entladevorrichtung.

Die Rohrbearbeitungsmaschine kann ferner eine Zuführvorrichtung aufweisen, die das Rohr entlang der Rohrführungsachse führt. Die Rohrführungsvorrichtung kann beispielsweise eine Vorschubvorrichtung und/oder eine Spannvorrichtung aufweisen. Das Rohr kann in der Spannvorrichtung eingespannt sein und durch die Vorschubvorrichtung in Richtung der Rohrführungsachse verschoben werden. Die Bearbeitungsvorrichtung weist insbesondere eine Bearbeitungsstelle an der Rohrführungsachse auf, an der das Rohr bearbeitet wird. An der Position der Bearbeitungsstelle ist beispielsweise ein Bearbeitungskopf der Bearbeitungsvorrichtung angeordnet. Der Bearbeitungskopf kann beispielsweise mit einer Laserstrahlquelle verbunden sein, um einen Laserstrahl auf das Rohr zu emittieren, der ein Rohrstück gewünschter Länge von dem Rohr abschneidet. Die Länge des Rohrstückes kann über die Vorschubvorrichtung eingestellt werden. Das abgeschnittene Rohrstück wird dann von der Entladevorrichtung entladen oder mit anderen Worten ausgeschleust.

Nach einem dritten Aspekt der Erfindung wird die eingangs erwähnte Aufgabe gelöst durch ein Verfahren zum Entladen eines Rohrstückes mittels einer erfindungsgemäßen Entladevorrichtung, mit den Schritten: (a) Führen eines Rohres seiner Länge nach von einer Bearbeitungsvorrichtung kommend entlang einer Rohrführungsachse der Entladevorrichtung, (b) Klappen zumindest einer Entladeklappe um eine Klappachse der zumindest einen Entladeklappe aus einer Fallstellung in eine Entladestellung, wobei die Klappachse parallel zu der Rohrführungsachse verläuft, das bearbeitete Rohrstück in der Fallstellung der Entladeklappe an der zumindest einen Entladeklappe vorbei fällt und in der Entladestellung mittels der zumindest einen Entladeklappe entladen wird, (c) Bearbeiten des Rohres mittels der Bearbeitungsvorrichtung, so dass das Rohrstück erhalten wird, und (d) Entladen des Rohrstückes mittels der zumindest einen Entladeklappe.

Damit weist das erfindungsgemäße Verfahren dieselben Vorteile auf, wie in Bezug auf die Entladevorrichtung bereits beschrieben worden ist.

Die Entladevorrichtung weist ferner zumindest ein Stützmittel auf, das auf einer der Bearbeitungsvorrichtung abgewandten Seite der zumindest einen Entladeklappe angeordnet ist und aus einer Entladelage in eine Stützlage bewegt wird, so dass das zumindest eine Stützmittel das Rohr in der Stützlage stützt.

Weiter bevorzugt erfolgt das Entladen des Rohrstückes mittels der zumindest einen Entladeklappe aus der Entladevorrichtung dadurch, dass das zumindest eine Stützmittel nach Bearbeitung des Rohres in seine Entladelage gebracht wird.

Außerdem bevorzugt wird ein Stützmittel des zumindest einen Stützmittels, das aus der Entladelage in eine Stützlage bewegt wird, in einen Klappbereich einer Entladeklappe der zumindest einen Entladeklappe bewegt, wobei die Entladeklappe, in deren Klappbereich sich das Stützmittel bewegt, sich in der Fallstellung befindet.

Ferner können zwei Entladeklappen vorgesehen sein, wobei die der Bearbeitungsvorrichtung zugewandte Entladeklappe sich in der Entladestellung befindet und die der Bearbeitungsvorrichtung abgewandte Entladeklappe sich in der Fallstellung befindet, so dass das Stützmittel zur Verlagerung in die Stützlage in den Klappbereich der der Bearbeitungsvorrichtung abgewandten Entladeklappe bewegt wird. Hierdurch können insbesondere kürzere Rohrstücke vorteilhaft entladen werden.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: eine perspektivische Ansicht auf eine erfindungsgemäße Rohrbearbeitungsmaschine;
- Figur 2: eine perspektivische Ansicht auf eine erfindungsgemäße Entladevorrichtung in einer ersten Konfiguration;
- Figur 3: eine perspektivische Ansicht auf die erfindungsgemäße Entladevorrichtung aus Fig. 2 in einer zweiten Konfiguration;
- Figur 4: eine perspektivische Ansicht auf die erfindungsgemäße Entladevorrichtung aus Fig. 2 in einer dritten Konfiguration; und
- Figur 5: eine perspektivische Ansicht auf die erfindungsgemäße Entladevorrichtung aus Fig. 2 in einer vierten Konfiguration.

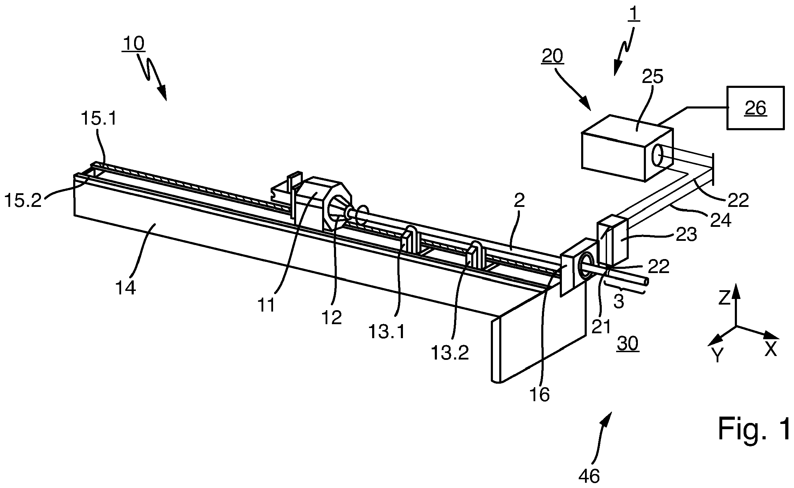

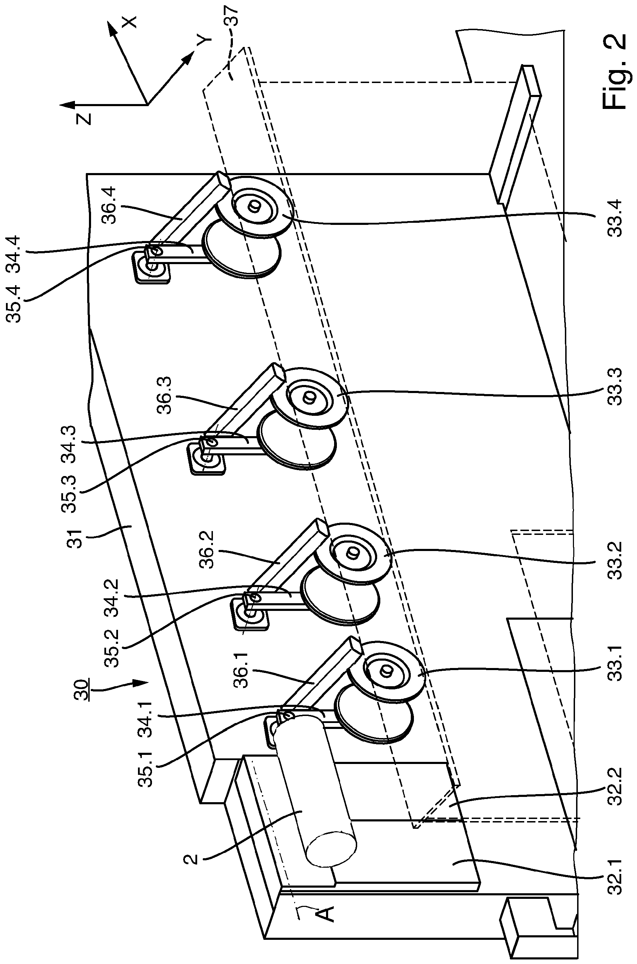

Figur 1 zeigt eine perspektivische Ansicht auf eine erfindungsgemäße Rohrbearbeitungsmaschine 1 mit einer Zuführvorrichtung 10, einer Bearbeitungsvorrichtung 20 und einer Entladevorrichtung 30. Die Entladevorrichtung 30 ist der Übersichtlichkeit halber in Fig. 1 nur durch ihr Bezugszeichen angedeutet. Die Entladevorrichtung 30 ist in den Figuren 2 bis 5 dargestellt.

Die Zuführvorrichtung 10 weist eine Vorschubvorrichtung 11 auf, mittels derer ein in einer Spannvorrichtung 12 der Zuführvorrichtung 10 eingespanntes Rohr 2, das mittels der Bearbeitungsvorrichtung 20 bearbeitet werden soll, in Richtung einer Rohrführungsachse X geführt bzw. verschoben wird. Die Vorschubvorrichtung 11 ist hierzu verfahrbar auf zwei Führungsschienen 15.1, 15.2 eines Maschinenbetts 14 der Zuführvorrichtung 10 angeordnet. Die Vorschubvorrichtung 11 verschiebt das Rohr 2 durch eine Durchschiebevorrichtung 16 der Zuführvorrichtung 10 zu einer Bearbeitungsstelle 21 der Bearbeitungsvorrichtung 20. Durch das Vorschieben mittels der Vorschubvorrichtung 11 lässt sich eine Länge des Rohrstückes 3 einstellen, dass mittels der Bearbeitungsvorrichtung 20 bearbeitet werden soll.

Die Zuführvorrichtung 10 weist ferner zwei Werkstückabstützungen 13.1, 13.2 auf, auf denen das Rohr 2 abgestützt wird. Die Werkstückabstützungen 13.1, 13.2 sind an dem Maschinenbett 14 angeordnet. Es können jedoch auch nur eine oder mehr als zwei Werkstückabstützungen 13 verwendet werden. Ebenso können auch nur eine oder mehr als zwei Führungsschienen 15 verwendet werden. Alternativ zu den Führungsschienen 15 können beispielsweise auch Führungsrollen verwendet werden. Außerdem kann die Vorschubvorrichtung 11 auch zu einer Drehung des Rohres 2 eingerichtet sein.

An der Bearbeitungsstelle 21 der Bearbeitungsvorrichtung 20 ist ein Bearbeitungskopf 23 der Bearbeitungsvorrichtung 20 angeordnet. Aus dem Bearbeitungskopf 23 wird ein Laserstrahl 22 in Richtung auf das Rohr 2 an der Bearbeitungsstelle 21 emittiert, um das Rohr 2 zu bearbeiten, nämlich ein Rohrstück 3 von dem Rohr 2 abzuschneiden, das sich hinter der Bearbeitungsstelle 21 in Richtung von der Vorschubvorrichtung 11 zu der Entladevorrichtung 30 befindet. Der Laserstrahl 22 wird von einer mit einem Steuergerät 26 verbundenen Laserstrahlquelle 25 emittiert, die in einer Strahlführung 24 zu dem Bearbeitungskopf 23 geführt wird. Das Steuergerät 26 steuert das Emittieren des Laserstrahles 22 beispielsweise in Abhängigkeit eines vorgegebenen Durchmessers des Rohrstückes 3, das aus dem Rohr 2 geschnitten werden soll.

Zudem kann die Rohrbearbeitungsmaschine 1 eine nicht gezeigte Beladevorrichtung aufweisen. Mittels der Beladevorrichtung können weitere Rohre 2 in der Spannvorrichtung 12 eingespannt werden, um mittels der Vorschubvorrichtung 11 zu der Bearbeitungsstelle 21 verschoben zu werden und dort zu Rohrstücken 3 bearbeitet zu werden.

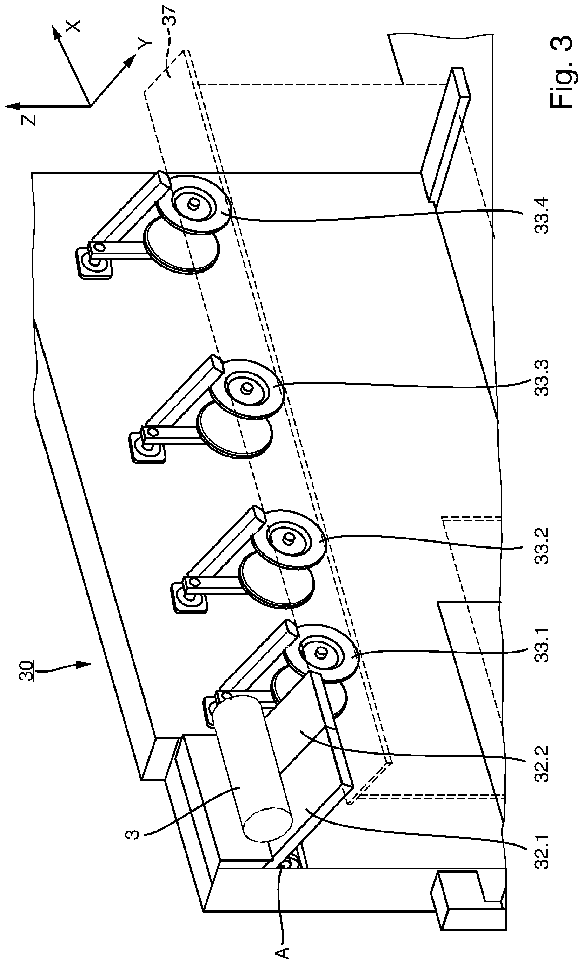

Figur 2 zeigt eine perspektivische Ansicht auf eine erfindungsgemäße Entladevorrichtung 30 in einer ersten Konfiguration. Die Entladevorrichtung 30 weist eine Wand 31 auf, an der entlang das Rohr 2 von der Vorschubvorrichtung 11 kommend in Richtung der Rohrführungsachse X geführt wird. An der Wand 31 sind als abführende Gleitfläche des geschnittenen Rohrstückes 3 zwei Entladeklappen 32.1, 32.2 angeordnet. Jede der Entladeklappen 32.1, 32.2 ist jeweils mit einem in dieser Darstellung nicht sichtbaren Antrieb, insbesondere in Form eines Hydraulikzylinder verbunden, mittels dem die Entladeklappen 32.1, 32.2 um eine parallel zu der Rohrführungsachse X verlaufende Klappachse A (siehe Figur 3) aus einer Fallstellung in eine Entladestellung klappbar sind. In der Fallstellung kann das Rohrstück 3 an der Entladeklappe 32.1, 32.2 vorbei fallen. In der Entladestellung kann das Rohrstück 3 mittels der Entladeklappen 32.1, 32.2 geführt und kontrolliert entladen werden. Die Entladeklappen 32.1, 32.2 sind in der Entladestellung dabei in eine Entladerichtung ausgerichtet, die schräg unter einem Entladewinkel relativ gegenüber einer Querachse Y verläuft, wobei die Querachse Y senkrecht zu der Rohrführungsachse X und einer Höhenachse Z verläuft. In der in Fig. 2 gezeigten ersten Konfiguration befinden sich die Entladeklappen 32.1, 32.2 in der Fallstellung. Die Entladeklappen 32.1, 32.2 sind dabei nebeneinander und an oder nahe der Bearbeitungsstelle 21 angeordnet. Obwohl in diesem Ausführungsbeispiel zwei Entladeklappen 32.1, 32.2 gezeigt sind, kann eine erfindungsgemäße Entladevorrichtung 30 auch nur eine Entladeklappe 32 oder mehr als zwei Entladeklappen 32 aufweisen.

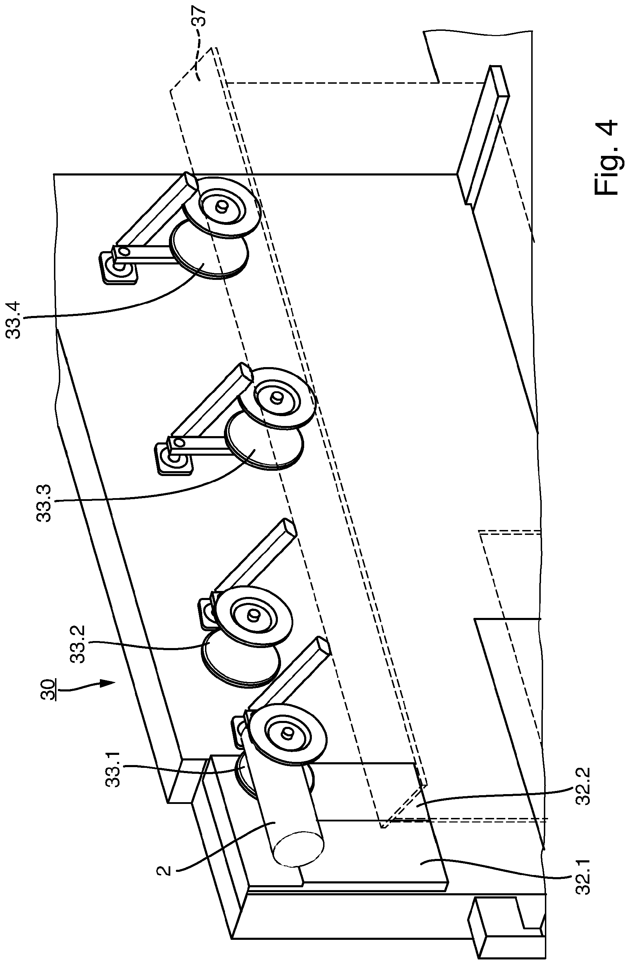

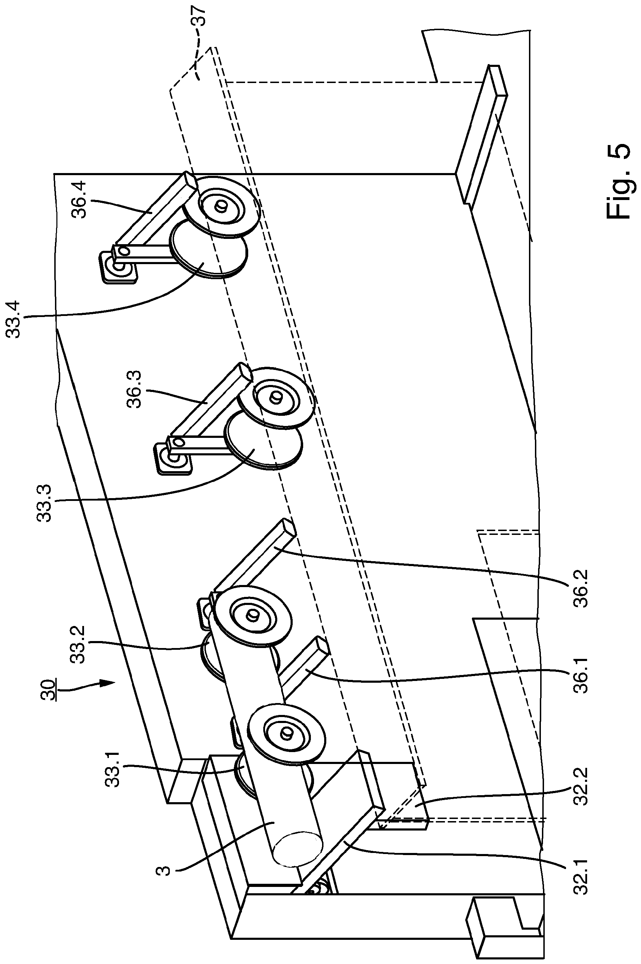

Ferner weist die Entladevorrichtung 30 vier Stützmittel 33.1, 33.2, 33.3, 33.4 auf, die vorliegend als Stützrollen ausgebildet sind. Die Stützmittel 33.1, 33.2, 33.3, 33.4 sind mittels je einem Schwenkarm 34.1, 34.2, 34.3, 34.4 an je einer Schwenkachse 35.1, 35.2, 35.3, 35.4, die vorliegend jeweils drehgelagert an der Wand 31 angeordnet. Die Schwenkachse 35.1, 35.2, 35.3, 35.4 sind dabei senkrecht zu den Klappachsen A verlaufend angeordnet. Neben jedem der Stützmittel 33.1, 33.2, 33.3, 33.4 ist jeweils ein erstes, insbesondere nicht verschwenkbares Gleitelement 36.1, 36.2, 36.3, 36.4 angeordnet. Das Funktionsprinzip der schwenkbaren Stützmittel 33.1, 33.2, 33.3, 33.4 und der ersten Gleitelemente 36.1, 36.2, 36.3, 36.4 wird später mit Bezug auf die Figuren 4 und 5 näher erläutert.

Auch wenn im vorliegenden Beispiel die Entladeklappen 32, die Schwenkachsen 35 und ersten Gleitelemente 36 an nur einer Wand 31 angeordnet sind, ist es beispielsweise ebenfalls möglich, einige oder alle der vorgenannten Bauteile an mehreren, beispielsweise parallel zueinander angeordneten Wänden, insbesondere an einem Gehäuse, oder etwa an einer Aufhängung anzuordnen.

Die in Figur 2 gezeigte erste Konfiguration der Entladevorrichtung 30 ist eine Konfiguration, in der ein kurzes Rohrstück 3 aus einem Rohr 2 fliegend, das heißt ohne durch die Entladevorrichtung 30 abgestützt zu werden, geschnitten werden soll. Insbesondere weist das zu schneidende Rohrstück 3 in Richtung der Rohrführungsachse eine Länge auf, die kürzer als die Länge von der ersten Entladeklappe 32.1 zu dem ersten Stützmittel 33.1 relativ von der Bearbeitungsstelle 21 zu dem vierten Stützmittel 33.4 betrachtet ist.

Figur 3 zeigt eine perspektivische Ansicht auf die erfindungsgemäße Entladevorrichtung 30 aus Fig. 2 in einer zweiten Konfiguration. Aus der ersten Konfiguration heraus wurden die beiden Entladeklappen 32.1, 32.2 mittels ihrer Hydraulikzylinder aus der Fallstellung in die Entladestellung bewegt, um die zweite Konfiguration einzunehmen. Die Entladeklappen 32.1, 32.2 können sich in der Entladestellung in direkten Kontakt mit dem bereits geschnittenen oder noch zu schneidenden Rohrstück 3 oder aber mit einem Abstand gegenüber dem Rohrstück 3 befinden. Mittels der Entladeklappen 32.1, 32.2 erfolgt das Entladen des Rohrstückes 3, in dem das Rohrstück 3 auf den Entladeklappen 32.1, 32.2 gleitet. Die Entladeklappen 32.1, 32.2 weisen dazu bevorzugt glatte, ebene erste Gleitflächen auf. Ein zweites Gleitelement 37 ist vorliegend als ein Gleittisch mit einer dritten Gleitfläche gestrichelt dargestellt. Das zweite Gleitelement 37 ist in die Entladerichtung der Entladeklappen 32.1, 32.2 ausgerichtet und ist in der Entladestellung der Entladeklappen 32.1, 32.2 neben den Entladeklappen 32.1, 32.2 angeordnet. Die Entladevorrichtung 30 kann ferner einen nicht gezeigten Sammelbehälter zum Sammeln der so entladenen Rohrstücke 3 oder eine nicht gezeigte Transportvorrichtung zum Abtransportieren der so entladenen Rohrstücke 3 aufweisen. Denkbar ist auch, das zweite Gleitelement 37 wegzulassen, so dass die Rohrstücke direkt in einen Behälter, in einen Container, auf ein Blech, auf einen Tisch oder auf ein Förderband oder dergleichen fallen.

Figur 4 zeigt eine perspektivische Ansicht auf die erfindungsgemäße Entladevorrichtung 30 aus Fig. 2 in einer dritten Konfiguration. Die dritte Konfiguration ist eine Konfiguration, in der ein langes Rohrstück 3 aus dem Rohr 2 geschnitten werden soll. Insbesondere weist das zu schneidende Rohrstück 3 in Richtung der Rohrführungsachse X eine Länge auf, die länger als die Länge von der ersten Entladeklappe 32.1 zu dem ersten Stützmittel 33.1 ist.

In der dritten Konfiguration gemäß Figur 4 sind das erste Stützmittel 33.1 und das zweite Stützmittel 33.2 der vier Stützmittel 33.1, 33.2, 33.3, 33.4 aus einer Entladelage in eine Stützlage bewegt worden. Die Stützlage befindet sich in Richtung einer Höhenachse Z oberhalb der Entladelage. Die Höhenachse Z verläuft senkrecht zu der Rohrführungsachse X und zu der Querachse Y. Hierzu wurden die Schwenkarme 34.1, 34.2 um die Schwenkachse 35.1, 35.2 relativ in Richtung zu den Entladeklappen 32.1, 32.2 geschwenkt. Wie an dem Stützmittel 33.1 zu sehen ist, stehen die Stützmittel 33.1, 33.2 in der Stützlage zum Stützen des zu bearbeitenden Rohres 2 bereit. Das Rohr 2 wird in der dritten Konfiguration entsprechend von der Vorschubvorrichtung 11 vorgeschoben und auf den als Stützrollen ausgebildeten Stützmitteln 33.1, 33.2 dabei gestützt und durch Drehen der Stützrollen geführt, wie auch in Fig. 5 zu sehen ist. Die Entladeklappen 32.1, 32.2 befinden sich dabei in der Fallstellung. Die Fallstellung ist in diesem Ausführungsbeispiel eine Stellung der Entladeklappen 32.1, 32.2, in der sich die Entladeklappen 32.1, 32.2 in Richtung der Höhenachse Z erstrecken.

Figur 5 zeigt eine perspektivische Ansicht auf die erfindungsgemäße Entladevorrichtung aus Fig. 2 in einer vierten Konfiguration. In der vierten Konfiguration befindet sich die erste Entladeklappe 32.1 gegenüber der dritten Konfiguration in der Entladestellung. Dadurch ist eine vorteilhafte Ausgestaltung der Erfindung besonders gut zu erkennen, bei der das Stützmittel 33.1 sich in der Stützlage in einem Klappbereich der zweiten Entladeklappe 32.2 befindet. Die der Bearbeitungsvorrichtung 20 zugewandte Entladeklappe 32.1 ist also in der Entladestellung und die der Bearbeitungsvorrichtung 20 abgewandte Entladeklappe 32.1 in der Fallstellung. Dadurch kann das Stützmittel 33.1 zur Verlagerung in die Stützlage, wie sie in Figur 5 gezeigt ist, in den Klappbereich der der Bearbeitungsvorrichtung 20 abgewandten Entladeklappe 32.2 bewegt werden.

Dadurch wird ermöglicht, dass sowohl kurze als auch lange Rohrstücke ohne ein Umrüsten mittels der Entladevorrichtung 30 kontrolliert entladen werden können, ohne beispielsweise in der Entladevorrichtung 30 zu verkanten. So wird in der zweiten Konfiguration die zweite Entladeklappe 32.2 in der Entladestellung zum Entladen des kurzen Rohrstückes 3 genutzt. In der vierten Konfiguration, in der ein langes Rohrstück 3 entladen werden soll, wird das Stützmittel 33.1 in den Klappbereich der zweiten Entladeklappe 32.2 bewegt, die sich in der Fallstellung befindet, um das Rohr 2 näher an der Bearbeitungsstelle 21 zu stützen, damit das Vorschieben des Rohres 2 erleichtert wird, so dass ein längeres Rohrstück 3 einfach verschoben und präzise geschnitten werden kann. Die vorliegend als Gleitschienen ausgebildeten ersten Gleitelemente 36.1, 36.2, 36.3, 36.4 mit zweiten Gleitflächen dienen dabei einem kontrollierten Entladen des langen Rohrstückes 3 in Richtung zu dem zweiten Gleitelement 37, auf dem das Rohrstück 3 entlang seiner gesamten Länge gleiten kann. Zum Entladen des geschnittenen Rohrstückes 3 müssen lediglich die Stützmittel 33.1, 33.2 von der Stützlage zurück in die Entladelage bewegt werden, wodurch das geschnittene Rohrstück 3 auf die Entladeklappe 32.1 und zumindest das erste Gleitelement 36.1 abgesenkt wird.

## Patentansprüche

1. Entladevorrichtung (30) zum Entladen eines Rohrstückes (3), das aus einem Rohr (2) mittels einer Bearbeitungsvorrichtung (20) bearbeitet wurde, wobei die Entladevorrichtung (30) eine Rohrführungsachse (X) aufweist, entlang derer das Rohr (2) seiner Länge nach von der Bearbeitungsvorrichtung (20) kommend geführt wird,
**dadurch gekennzeichnet, dass**
eine Entladeklappe (32.1, 32.2) vorgesehen ist, die um eine parallel zu der Rohrführungsachse (X) verlaufende Klappachse (A) aus einer Fallstellung in eine Entladestellung klappbar ist, wobei ferner zumindest ein Stützmittel (33.1, 33.2, 33.3, 33.4) der Entladevorrichtung (30) zum Stützen des Rohres (2) auf einer der Bearbeitungsvorrichtung (20) abgewandten Seite der zumindest einen Entladeklappe (32.1, 32.2) angeordnet ist, und wobei die zumindest eine Entladeklappe (32.1, 32.2) derart eingerichtet ist, dass in der Fallstellung das Rohrstück (3) an der zumindest einen Entladeklappe (32.1, 32.2) vorbei fallen kann und in der Entladestellung das Rohrstück (3) kontrolliert entladen werden kann.

2. Entladevorrichtung (30) nach Anspruch 1,
**dadurch gekennzeichnet, dass**
das zumindest eine Stützmittel (33.1, 33.2, 33.3, 33.4) aus einer Stützlage in eine Entladelage bewegbar ausgebildet ist, wobei das zumindest eine Stützmittel (33.1, 33.2, 33.3, 33.4) das Rohr (2) in der Stützlage stützt und in der Entladelage freigibt, so dass das Rohrstück (3) entladen werden kann.

3. Entladevorrichtung (30) nach Anspruch 2,
**dadurch gekennzeichnet, dass**
das zumindest eine Stützmittel (33.1, 33.2, 33.3, 33.4) schwenkbar relativ gegenüber einer Schwenkachse (35.1, 35.2, 35.3, 35.4) ausgebildet ist, um aus der Stützlage in die Entladelage bewegt zu werden.

4. Entladevorrichtung (30) nach Anspruch 2 oder 3,
**dadurch gekennzeichnet, dass**
sich ein Stützmittel (33.1) des zumindest einen Stützmittels (33.1, 33.2, 33.3, 33.4) in der Stützlage in einem Klappbereich zumindest einer Entladeklappe (32.1, 32.2) der zumindest einen Entladeklappe (32.1, 32.2) befindet.

5. Entladevorrichtung (30) nach Anspruch 4,
**dadurch gekennzeichnet, dass**
das Stützmittel (33.1), das sich in der Stützlage in dem Klappbereich der Entladeklappe (32.2) befindet, so eingerichtet ist, dass es die Stützlage nur einnehmen kann, wenn die Entladeklappe (32.1, 32.2), in deren Klappbereich sich das Stützmittel (33.1) befindet, sich in der Fallstellung befindet.

6. Entladevorrichtung (30) nach Anspruch 5,
**dadurch gekennzeichnet, dass**
wenigstens zwei Entladeklappen (32.1, 32.2) vorgesehen sind, wobei Einrichtung derart ist, dass die der Bearbeitungsvorrichtung (20) zugewandte Entladeklappe (32.1) sich in der Entladestellung befinden kann und die der Bearbeitungsvorrichtung (20) abgewandte Entladeklappe (32.1) sich in der Fallstellung befinden muss, wenn das Stützmittel (33.1) sich in der Stützlage in dem Klappbereich der der Bearbeitungsvorrichtung (20) abgewandten Entladeklappe (32.2) befindet.

7. Entladevorrichtung (30) nach einem der Ansprüche 1 bis 6,
**dadurch gekennzeichnet, dass**
ein erstes Gleitelement (36.1, 36.2, 36.3, 36.4) neben dem zumindest einen Stützmittel (33.1, 33.2, 33.3, 33.4) zum Entladen des Rohrstückes (3) angeordnet ist.

8. Entladevorrichtung (30) nach einem der voranstehenden Ansprüche,
**dadurch gekennzeichnet, dass**
zumindest zwei Entladeklappen (32.1, 32.2) nebeneinander angeordnet sind.

9. Rohrbearbeitungsmaschine (1) mit einer Bearbeitungsvorrichtung (20) und einer Entladevorrichtung (30) nach einem der voranstehenden Ansprüche.

10. Verfahren zum Entladen eines Rohrstückes (3) mittels einer Entladevorrichtung (30) nach einem der Ansprüche 1 bis 8, mit den Schritten:
(a) Führen eines Rohres (2) seiner Länge nach von einer Bearbeitungsvorrichtung (20) kommend entlang einer Rohrführungsachse (X) der Entladevorrichtung (20),
(b) Klappen zumindest einer Entladeklappe (32.1, 32.2) um eine Klappachse (A) der zumindest einen Entladeklappe (32.1, 32.2) aus einer Fallstellung in eine Entladestellung, wobei die Klappachse (A) parallel zu der Rohrführungsachse (X) verläuft, sodass ein bearbeitetes Rohrstück (3) in der Fallstellung der zumindest einen Entladeklappe (32.1, 32.2) an der zumindest einen Entladeklappe (32.1, 32.2) vorbei fällt und in der Entladestellung mittels der zumindest einen Entladeklappe (32.1, 32.2) entladen wird,
(c) Bearbeiten des Rohres (2) mittels der Bearbeitungsvorrichtung (20), so dass das Rohrstück (3) erhalten wird, und
(d) Entladen des Rohrstückes (3) mittels der zumindest einen Entladeklappe (32.1, 32.2), wobei die Entladevorrichtung (30) zumindest ein Stützmittel (33.1, 33.2, 33.3, 33.4) aufweist, das auf einer der Bearbeitungsvorrichtung (20) abgewandten Seite der zumindest einen Entladeklappe (32.1, 32.2) angeordnet ist und aus einer Entladelage in eine Stützlage bewegt wird, so dass das zumindest eine Stützmittel (33.1, 33.2, 33.3, 33.4) das Rohr (2) in der Stützlage stützt.

11. Verfahren nach Anspruch 10,
**dadurch gekennzeichnet, dass**
das Entladen des Rohrstückes (3) mittels der zumindest einen Entladeklappe (32.1, 32.2) aus der Entladevorrichtung (30) dadurch erfolgt, dass das zumindest eine Stützmittel (33.1, 33.2, 33.3, 33.4) nach Bearbeitung des Rohres (2) in seine Entladelage gebracht wird.

12. Verfahren nach Anspruch 10 oder 11,
**dadurch gekennzeichnet, dass**
ein Stützmittel (33.1) des zumindest einen Stützmittels (33.1, 33.2, 33.3, 33.4), das aus der Entladelage in eine Stützlage bewegt wird, in einen Klappbereich einer Entladeklappe (32.2) der zumindest einen Entladeklappe (32.1, 32.2) bewegt wird, wobei die Entladeklappe (32.2), in deren Klappbereich sich das Stützmittel (33.1) bewegt, sich in der Fallstellung befindet.

13. Verfahren nach Anspruch 10, 11 oder 12,
**dadurch gekennzeichnet, dass**
zwei Entladeklappen (32.1, 32.2) vorgesehen sind, wobei die der Bearbeitungsvorrichtung (20) zugewandte Entladeklappe (32.1) sich in der Entladestellung befindet und die der Bearbeitungsvorrichtung (20) abgewandte Entladeklappe (32.1) sich in der Fallstellung befindet, so dass das Stützmittel (33.1) zur Verlagerung in die Stützlage in den Klappbereich der der Bearbeitungsvorrichtung (20) abgewandten Entladeklappe (32.2) bewegt wird.

## Claims

1. A discharge device (30) for discharging a pipe section (3) which has been machined from a pipe (2) by means of a machining apparatus (20), wherein the discharge device (30) has a pipe guide axis (X) along which the pipe (2) is guided along its length coming from the machining apparatus (20),
**characterized in that**
a discharge flap (32.1, 32.2) is provided, which can be folded about a folding axis (A) extending parallel to the pipe guide axis (X) from a falling position into a discharge position, wherein furthermore at least one support means (33.1, 33.2, 33.3, 33.4) of the discharge device (30) for supporting the pipe (2) is arranged on a side of the at least one discharge flap (32.1, 32.2) facing away from the machining apparatus (20), and wherein the at least one discharge flap (32.1, 32.2) is arranged in such a way that in the falling position the pipe section (3) can fall past the at least one discharge flap (32.1, 32.2) and the pipe section (3) can be discharged in a controlled manner in the discharge position.

2. The discharge device (30) according to claim 1,
**characterized in that**
the at least one support means (33.1, 33.2, 33.3, 33.4) is designed to be movable from a support position into a discharge position, wherein the at least one support means (33.1, 33.2, 33.3, 33.4) supports the pipe (2) in the support position and releases it in the discharge position so that the pipe section (3) can be discharged.

3. The discharge device (30) according to claim 2,
**characterized in that**
the at least one support means (33.1, 33.2, 33.3, 33.4) is designed to be pivotable relative to a pivot axis (35.1, 35.2, 35.3, 35.4) in order to be moved from the support position into the discharge position.

4. The discharge device (30) according to claim 2 or 3,
**characterized in that**
a support means (33.1) of the at least one support means (33.1, 33.2, 33.3, 33.4) is located in the support position in a folding region of at least one discharge flap (32.1, 32.2) of the at least one discharge flap (32.1, 32.2).

5. The discharge device (30) according to claim 4,
**characterized in that**
the support means (33.1), which is located in the support position in the folding region of the discharge flap (32.2), is arranged in such a way that it can only assume the support position when the discharge flap (32.1, 32.2), in the folding region of which the support means (33.1) is located, is in the falling position.

6. The discharge device (30) according to claim 5,
**characterized in that**
at least two discharge flaps (32.1, 32.2) are provided, the arrangement being such that the discharge flap (32.1) facing the machining apparatus (20) can be in the discharge position and the discharge flap (32.1) facing away from the machining apparatus (20) must be in the falling position when the support means (33.1) is in the support position in the folding region of the discharge flap (32.2) facing away from the machining apparatus (20).

7. The discharge device (30) according to one of the claims 1 to 6,
**characterized in that**
a first sliding element (36.1, 36.2, 36.3, 36.4) is arranged next to the at least one support means (33.1, 33.2, 33.3, 33.4) for discharging the pipe section (3).

8. The discharge device (30) according to one of the preceding claims,
**characterized in that**
at least two discharge flaps (32.1, 32.2) are arranged next to each other.

9. A pipe machining apparatus (1) comprising a machining apparatus (20) and a discharge device (30) according to one of the preceding claims.

10. A method for discharging a pipe section (3) by means of a discharge device (30) according to any one of claims 1 to 8, comprising the steps of:
(a) guiding a pipe (2) lengthwise coming from a machining apparatus (20) along a pipe guide axis (X) of the discharge device (20),
(b) folding at least one discharge flap (32.1, 32.2) about a folding axis (A) of the at least one discharge flap (32.1, 32.2) from a falling position into a discharge position, wherein the folding axis (A) extends parallel to the pipe guide axis (X), so that a machined pipe section (3) in the falling position of the at least one discharge flap (32.1, 32.2) falls past the at least one discharge flap (32.1, 32.2) and is discharged in the discharge position by means of the at least one discharge flap (32.1, 32.2),
(c) machining the pipe (2) by means of the machining apparatus (20) so as to obtain the pipe section (3), and
(d) discharging the pipe section (3) by means of the at least one discharge flap (32.1, 32.2), wherein the discharge device (30) has at least one support means (33.1, 33.2, 33.3, 33.4) which is arranged on a side of the at least one discharge flap (32.1, 32.2) facing away from the machining apparatus (20) and is moved from a discharge position into a support position, so that the at least one support means (33.1, 33.2, 33.3, 33.4) supports the pipe (2) in the support position.

11. The method according to claim 10,
**characterized in that**
the pipe section (3) is discharged from the discharge device (30) by means of the at least one discharge flap (32.1, 32.2) **in that** the at least one support means (33.1, 33.2, 33.3, 33.4) is brought into its discharge position after the pipe (2) has been processed.

12. The method according to claim 10 or 11,
**characterized in that**
a support means (33.1) of the at least one support means (33.1, 33.2, 33.3, 33.4), which is moved from the discharge position into a support position, is moved into a folding region of a discharge flap (32.2) of the at least one discharge flap (32.1, 32.2), wherein the discharge flap (32.2), in the folding region of which the support means (33.1) moves, is in the falling position.

13. The method according to claim 10, 11 or 12,
**characterized in that**
two discharge flaps (32.1, 32.2) are provided, wherein the discharge flap (32.1) facing the machining apparatus (20) is in the discharge position and the discharge flap (32.1) facing away from the machining apparatus (20) is in the falling position, so that the support means (33.1) is moved into the folding region of the discharge flap (32.2) facing away from the machining apparatus (20) for displacement into the support position.

## Revendications

1. Dispositif de déchargement (30) destiné à décharger un tronçon de tube (3) qui a été usiné à partir d'un tube (2) au moyen d'un dispositif d'usinage (20), où le dispositif de déchargement (30) présente un axe de guidage de tube (X) le long duquel le tube (2) est guidé dans sa longueur depuis le dispositif d'usinage (20),
**caractérisé en ce que**
il est prévu un volet de déchargement (32.1, 32.2) qui peut être rabattu autour d'un axe de rabattement (A) s'étendant parallèlement à l'axe de guidage de tube (X) d'une position de chute dans une position de déchargement, où en outre au moins un moyen de soutien (33.1, 33.2, 33.3, 33.4) du dispositif de déchargement (30) destiné à soutenir le tube (2) est disposé sur un côté opposé au dispositif d'usinage (20) de l'au moins un volet de déchargement (32.1, 32.2), et où l'au moins un volet de déchargement (32.1, 32.2) est aménagé de telle sorte que, dans la position de chute, le tronçon de tube (3) peut tomber devant l'au moins un volet de déchargement (32.1, 32.2) et, dans la position de déchargement, le tronçon de tube (3) peut être déchargé de manière contrôlée.

2. Dispositif de déchargement (30) selon la revendication 1,
**caractérisé en ce que**
l'au moins un moyen de soutien (33.1, 33.2, 33.3, 33.4) est conçu de manière à pouvoir être déplacé d'une position de soutien dans une position de déchargement, où l'au moins un moyen de soutien (33.1, 33.2, 33.3, 33.4) soutient le tube (2) dans la position de soutien et le libère dans la position de déchargement, de sorte que le tronçon de tube (3) peut être déchargé.

3. Dispositif de déchargement (30) selon la revendication 2,
**caractérisé en ce que**
l'au moins un moyen de soutien (33.1, 33.2, 33.3, 33.4) est conçu de manière à pouvoir pivoter par rapport à un axe de pivotement (35.1, 35.2, 35.3, 35.4), afin d'être déplacé de la position de soutien à la position de déchargement.

4. Dispositif de déchargement (30) selon la revendication 2 ou 3,
**caractérisé en ce que**
un moyen de soutien (33.1) de l'au moins un moyen de soutien (33.1, 33.2, 33.3, 33.4) se trouve dans la position de soutien dans une zone de rabattement d'au moins un volet de déchargement (32.1, 32.2) de l'au moins un volet de déchargement (32.1, 32.2).

5. Dispositif de déchargement (30) selon la revendication 4,
**caractérisé en ce que**
le moyen de soutien (33.1), qui se trouve en position de soutien dans la zone de rabattement du volet de déchargement (32.2), est disposé de telle sorte qu'il ne peut prendre la position de soutien que lorsque le volet de déchargement (32.1, 32.2), dans la zone de rabattement duquel se trouve le moyen de soutien (33.1), se trouve en position de chute.

6. Dispositif de déchargement (30) selon la revendication 5,
**caractérisé en ce que**
au moins deux volets de déchargement (32.1, 32.2) sont prévus, où l'agencement est tel que le volet de déchargement (32.1) tourné vers le dispositif d'usinage (20) peut se trouver dans la position de déchargement et le volet de déchargement (32.1) opposé au dispositif d'usinage (20) doit se trouver dans la position de chute lorsque le moyen de soutien (33.1) se trouve en position de soutien dans la zone de rabattement du volet de déchargement (32.2) opposé au dispositif d'usinage (20).

7. Dispositif de déchargement (30) selon l'une des revendications 1 à 6,
**caractérisé en ce que**
un premier élément de glissement (36.1, 36.2, 36.3, 36.4) est disposé à côté de l'au moins un moyen de soutien (33.1, 33.2, 33.3, 33.4) afin de décharger le tronçon de tube (3).

8. Dispositif de déchargement (30) selon l'une des revendications précédentes,
**caractérisé en ce que**
au moins deux volets de déchargement (32.1, 32.2) sont disposés l'un à côté de l'autre.

9. Machine d'usinage de tubes (1) comprenant un dispositif d'usinage (20) et un dispositif de déchargement (30) selon l'une des revendications précédentes.

10. Procédé de déchargement d'un tronçon de tube (3) au moyen d'un dispositif de déchargement (30) selon l'une des revendications 1 à 8, comprenant comme étapes :
(a) le guidage d'un tube (2) dans sa longueur, depuis un dispositif d'usinage (20), le long d'un axe de guidage de tube (X) du dispositif de déchargement (20),
(b) le rabattement d'au moins un volet de déchargement (32.1, 32.2) autour d'un axe de rabattement (A) de l'au moins un volet de déchargement (32.1, 32.2) d'une position de chute à une position de déchargement, où l'axe de rabattement (A) s'étend parallèlement à l'axe de guidage de tube (X), de sorte qu'un tronçon de tube usiné (3) tombe devant l'au moins un volet de déchargement (32.1, 32.2) dans la position de chute de l'au moins un volet de déchargement (32.1, 32.2) et est déchargé dans la position de déchargement au moyen de l'au moins un volet de déchargement (32.1, 32.2),
(c) l'usinage du tube (2) au moyen du dispositif d'usinage (20) de manière à obtenir le tronçon de tube (3), et
(d) le déchargement du tronçon de tube (3) au moyen de l'au moins un volet de déchargement (32.1, 32.2), où le dispositif de déchargement (30) présente au moins un moyen de soutien (33.1, 33.2, 33.3, 33.4) qui est placé sur un côté, opposé au dispositif d'usinage (20), de l'au moins un volet de déchargement (32. 1, 32.2) et est déplacé d'une position de déchargement à une position de soutien, de sorte que l'au moins un moyen de soutien (33.1, 33.2, 33.3, 33.4) soutient le tube (2) dans la position de soutien.

11. Procédé selon la revendication 10,
**caractérisé en ce que**
le déchargement du tronçon de tube (3) au moyen de l'au moins un volet de déchargement (32.1, 32.2) hors du dispositif de déchargement (30) s'effectue en amenant l'au moins un moyen de soutien (33.1, 33.2, 33.3, 33.4) dans sa position de déchargement après usinage du tube (2).

12. Procédé selon la revendication 10 ou 11,
**caractérisé en ce que**
un moyen de soutien (33.1) de l'au moins un moyen de soutien (33.1, 33.2, 33.3, 33.4), qui est déplacé de la position de déchargement dans une position de soutien, est déplacé dans une zone de rabattement d'un volet de déchargement (32.2) de l'au moins un volet de déchargement (32.1, 32.2), où le volet de déchargement (32.2), dans la zone de rabattement duquel se déplace le moyen de soutien (33.1), se trouve dans la position de chute.

13. Procédé selon la revendication 10, 11 ou 12,
**caractérisé en ce que**
deux volets de déchargement (32.1, 32.2) sont prévus, où le volet de déchargement (32.1) tourné vers le dispositif d'usinage (20) se trouve dans la position de déchargement et le volet de déchargement (32.1) opposé au dispositif d'usinage (20) se trouve dans la position de chute, de sorte que le moyen de soutien (33.1) est déplacé dans la zone de rabattement du volet de déchargement (32.2) opposé au dispositif d'usinage (20) pour être déplacé dans la position de soutien.
